# EUROPEAN PATENT APPLICATION

(11) **EP 2 327 674 A2**
(43) Date of publication of application: **01.06.2011**
(21) Application number: 09806817.4
(22) Date of filing: 10.08.2009
(51) Int. Cl.: C04B 35/28

(54) **METHOD FOR PRODUCING NICKEL MANGANESE COBALT SPINEL FERRITE HAVING LOW PERMEATION LOSS, AND NICKEL MANGANESE COBALT SPINEL FERRITE PRODUCED BY SAME**

(30) Priority: 12.08.2008 KR 20080079133
(71) Applicant: EMW Co., Ltd., Namdong-gu, Incheon 405-819 (KR)
(72) Inventor: RYOU,Byung Hoon, Seoul 137-060 (KR); SUNG, Won Mo, Siheung-si Gyeonggi-do 429-450 (KR); AHN, Won Ki, Anyang-si Gyeonggi-do 431-847 (KR)
(74) Representative: Kling, Simone
(86) International application number: PCT/KR2009/004441
(87) International publication number: WO 2010/018955

(57) **Abstract**

Disclosed herein is a method for producing a spinel ferrite which has a low permeability loss and a low dielectric loss so that the spinel ferrite can be widely used as a material for high-frequency (MHz) electronic components, and a spinel ferrite produced thereby. The method for producing the spinel ferrite comprises the steps of: providing nickel oxide, cobalt oxide, manganese oxide and iron oxide; wet-mixing the nickel oxide, the cobalt oxide, the manganese oxide and the iron oxide in methanol to obtain a mixture; collecting powder from the mixture and drying the collected powder; grinding the dried powder; and heat-treating the dried powder, thereby producing a nickel-manganese-cobalt spinel ferrite having a low permeability loss and a low dielectric loss. The nickel-manganese-cobalt spinel ferrite can be widely as a material for RF electronic components, and when it is applied to an antenna, it can reduce the length of the antenna and improve the bandwidth, efficiency and performance of the antenna.

## Description

### BACKGROUND OF THE INVENTION

### Field of the Invention

The present invention relates to a method for producing a ferrite and a ferrite produced thereby, and more particularly to a method for producing a nickel-manganese-cobalt spinel ferrite having a low permeability loss and a low dielectric loss and to a nickel-manganese-cobalt spinel ferrite produced thereby.

### Description of the Prior Art

Ferrite is a solid solution in which alloying elements or impurities melt in iron having a body-centered cubic crystalline structure, which is stable at a temperature of 900 °C or below. It is the metallographic name for steel and is a solid solution based on alpha (α) iron. Thus, it has an appearance similar to pure iron, but is also named "silicon ferrite" or "ferrosilicon" according to the name of the element melted therein. When ferrite is observed with a microscope, it is a single phase, and a white portion of ferrite in which carbon melts a little appears together with a portion of pearlite that looks black. Ferrite is used in various applications, including high-frequency transformers, pickup coils, and magnetic recorders for tape recorders.

Of such ferrites, spinel ferrite is generally used in low-frequency applications, including EMC cores, low-output and high-inductance resonance circuits, and broadband transformers, and is mainly used as an absorbing material, because it has a high permeability loss in a high-frequency range higher than MHz.

Specifically, spinel ferrite has a high magnetic permeability at frequencies lower than MHz, but also has a high permeability loss. Because of such properties, it is difficult to use spinel ferrite as a material for RF electronic components, due to its high permeability loss. For this reason, spinel ferrite is mainly used as an absorbing material.

Methods for producing this spinel ferrite include a method employing a ball mill, a co-precipitation method, a sol-gel method, and a hydrothermal synthesis method.

The term "sol-gel" refers to a series of procedures, including transition from a flowable sol to a gel showing viscoelastic properties, like a semi-solid state. The term "hydrothermal synthesis" refers to a method in which a metal salt, oxide, hydrate or metal powder is synthesized or the crystal thereof is grown in a solution or suspension state depending on the solubility of the material, temperature, pressure and the concentration of the solvent. The term "co-precipitation" refers to a phenomenon in which, when one substance precipitates in a solution in which two substances having similar chemical properties coexist, another substance also precipitates.

However, the method of producing spinel ferrite by the sol-gel or hydrothermal synthesis method comprises controlling synthesis conditions, including temperature, pressure and pH, and has a problem in that it is difficult to produce spinel ferrite in large amounts, because it has low reproducibility and is complicated.

Meanwhile, the method of producing spinel ferrite by co-precipitation has an advantage in that it has a simple production process compared to the hydrothermal synthesis method, and thus can also be used to produce large amounts of spinel ferrite. However, this method has shortcomings in that large amounts of wastewater and waste are generated in a washing process and in that the production cost is high because the mass ratio of metal relative to a metal salt that is used as a raw material.

### SUMMARY OF THE INVENTION

Accordingly, the present invention has been made in view of the problems occurring in the prior art, and it is an object of the present invention to provide a method for producing a nickel-manganese-cobalt spinel ferrite which has a low permeability loss and a low dielectric loss so as to be used as a material for electronic components at high frequencies (higher than MHz), and a nickel-manganese-cobalt spinel ferrite produced thereby.

Another object of the present invention is to provide a method for producing a nickel-manganese-cobalt spinel ferrite, which has a simple production process and the reproducibility of which can be sufficiently ensured, and a nickel-manganese-cobalt spinel ferrite produced thereby.

Still another object of the present invention is to provide a method for producing a nickel-manganese-cobalt spinel ferrite, which can produce a nickel-manganese-cobalt spinel ferrite in large amounts in a cost-effective manner, and a nickel-manganese-cobalt spinel ferrite produced thereby.

To achieve the above objects, the present invention provides a method for producing a nickel-manganese-cobalt spinel ferrite, the method comprising the steps of: providing nickel oxide (NiO), cobalt oxide (Co₃O₄), manganese oxide (MnO) and iron oxide (Fe₂O); wet-mixing the nickel oxide, the cobalt oxide, the manganese oxide and the iron oxide in methanol to obtain a mixture; collecting powder from the mixture and drying the collected powder; grinding the dried powder; and heat-treating the dried powder.

In the step of providing the nickel oxide, the cobalt oxide, the manganese oxide and the iron oxide, the nickel oxide, the cobalt oxide, the manganese oxide and the iron oxide may be provided at a molar ratio of 0.6-0.8 : 0.005-0.007 : 0.052-0.054 : 1.04-1.06, and preferably 0.7 : 0.006 : 0.053 : 1.05.

In the step of providing the nickel oxide, the cobalt oxide, the manganese oxide and the iron oxide, the nickel oxide, the cobalt oxide, the manganese oxide and the iron oxide may be provided at a molar ratio of 0.6-0.8 : 0.005-0.007 : 0.057-0.059 : 1.13-1.15, and preferably 0.76 : 0.006 : 0.058 : 1.14.

The wet-mixing step may be carried out using a ball mill for 45-50 hours, and preferably about 48 hours.

The step of drying the mixture powder may be carried out at a temperature between 110°C and 130 °C for 11-13 hours. Preferably, it may be carried out at about 120 °C for 12 hours.

First heat-treatment in the heat-treatment step may be carried out at a temperature between 750 °C and 850 °C. Preferably, it may be carried out at about 800 °C.

Second heat-treatment after the first heat-treatment may be carried out at a temperature between 1150 °C and 1250 °C. Preferably, it may be carried out at about 1200 °C.

Second heat-treatment after the first heat-treatment may be carried out at a temperature between 1050 °C and 1150 °C. Preferably, it may be carried out at about 1100 °C.

Third heat-treatment after the second heat-treatment may be carried out at a temperature between 1200 °C and 1300 °C. Preferably, it may be carried out at about 1250 °C.

Third heat-treatment after the second heat-treatment may be carried out at a temperature between 1100 °C and 1200 °C. Preferably, it may be carried out at about 1150 °C.

The present invention also provides a nickel-manganese-cobalt spinel ferrite which is produced by the above-described production method.

### BRIEF DESCRIPTION OF THE DRAWINGS

The above and other objects, features and advantages of the present invention will be more clearly understood from the following detailed description taken in conjunction with the accompanying drawing, in which:
FIG. 1 is a block diagram showing a method for producing a nickel-manganese-cobalt spinel ferrite according to the present invention;
FIG. 2 is a block diagram showing a method for producing a nickel-manganese-cobalt spinel ferrite according to a first embodiment of the present invention;
FIG. 3 is a graphic diagram showing the change in the complex permittivity of a nickel-manganese-cobalt spinel ferrite according to a first embodiment of the present invention in a frequency range from 10 MHz to 1 GHz;
FIG. 4 is a graphic diagram showing the change in the complex permeability of a nickel-manganese-cobalt spinel ferrite according to a first embodiment of the present invention in a frequency range from 10 MHz to 1 GHz;
FIG. 5 is a graphic diagram showing a comparison of performance between an antenna manufactured using a nickel-manganese-cobalt spinel ferrite according to a first embodiment of the present invention and an antenna manufactured using a material having a permittivity of 40;
FIG. 6 is a table showing a comparison of performance between an antenna manufactured using a nickel-manganese-cobalt spinel ferrite according to a first embodiment of the present invention and an antenna manufactured using a material having a permittivity of 40;
FIG. 7 is a block diagram showing a method for producing a nickel-manganese-cobalt spinel ferrite according to a second embodiment of the present invention; and
FIG. 8 is a graphic diagram showing the change in the complex permeability of a method for producing a nickel-manganese-cobalt spinel ferrite according to a second embodiment of the present invention in a frequency range from 100 MHz to 400 MHz.

### DETAILED DESCRIPTION OF THE INVENTION

Hereinafter, preferred embodiments of the present invention will be described in detail with reference to the accompanying drawings, but the scope of the present invention is not limited by the embodiments. For reference, like reference numerals designate like elements throughout the specification. Under this rule, the drawings can be described by referring to the contents shown in other drawings, and a repeated description or a content which is considered to be obvious to a person skilled in the art may be omitted.

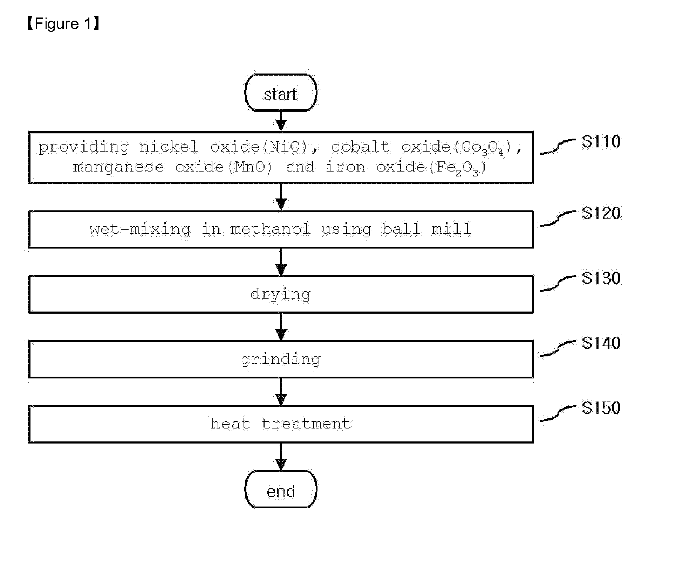

FIG. 1 is a block diagram showing a method for producing a nickel-manganese-cobalt spinel ferrite according to the present invention.

As shown in FIG. 1, the inventive method for producing the nickel-manganese-cobalt spinel ferrite comprises the steps of: (S110) providing nickel oxide, cobalt oxide, manganese oxide and iron oxide; (S120) wet-mixing these materials in methanol using a ball mill; (S130) collecting powder from the mixture and drying the collected powder; (S140) grinding the dried powder; and (S150) heat-treating the ground powder.

Preferred embodiments of this method will now be described in detail.

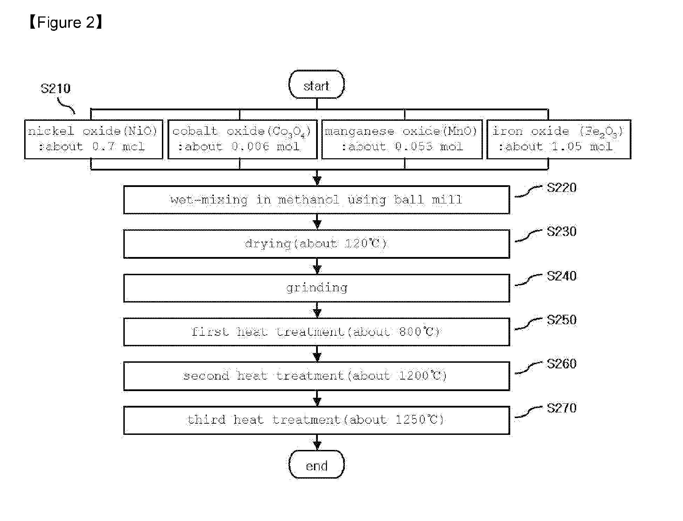

FIG. 2 is a block diagram showing a method for producing a nickel-manganese-cobalt spinel ferrite according to a first embodiment of the present invention.

In the method for producing the nickel-manganese-cobalt spinel ferrite according to the first embodiment of the present invention, nickel oxide, cobalt oxide, manganese oxide and iron oxide are weighed to have a molar ratio of about 0.7 : 0.006 : 0.053 : 1.05 (S210).

The nickel oxide, cobalt oxide, manganese oxide and iron oxide thus provided are wet-mixed with each other in a methanol (MeOH) using a ball mill for about 48 hours (S220).

Powder is collected from the resulting mixture of nickel oxide, cobalt oxide, manganese oxide and iron oxide and dried at about 120 °C for about 12 hours (S230).

The dried powder is ground to have a smaller particle size (S240).

The dried and ground powder is subjected to a first heat-treatment process at a temperature of about 800 °C (S250).

By carrying out the first heat-treatment process, a process for synthesizing a spinel ferrite in subsequent second heat-treatment and third heat-treatment processes can further be promoted.

The first-heat-treated powder is subjected to a second heat-treatment process at a temperature of 1200 °C (S260).

The second-heat-treated powder is subjected to a third heat-treatment process at a temperature of about 1250 °C (S270).

Through such processes, the nickel oxide, the cobalt oxide, the manganese oxide and the iron oxide are synthesized into a spinel ferrite.

FIG. 2 shows the first embodiment of the present invention. When the present invention is applied in practice, it is not limited only to the first embodiment. Specifically, nickel oxide, cobalt oxide, manganese oxide and iron oxide may be provided at a molar ratio of 0.6-0.8 : 0.005-0.007 : 0.052-0.054 : 1.04-1.06, the wet mixing step may be carried out for 45-50 hours, and the powder may be dried at a temperature between 110 °C to 130 °C for 11-13 hours.

Also, the first heat treatment may be carried out at a temperature between 750 °C and 850 °C, the second heat treatment may be carried out at a temperature between 1150 °C and 1250 °C, and the third heat treatment may be carried out at a temperature between 1200 °C and 1300 °C.

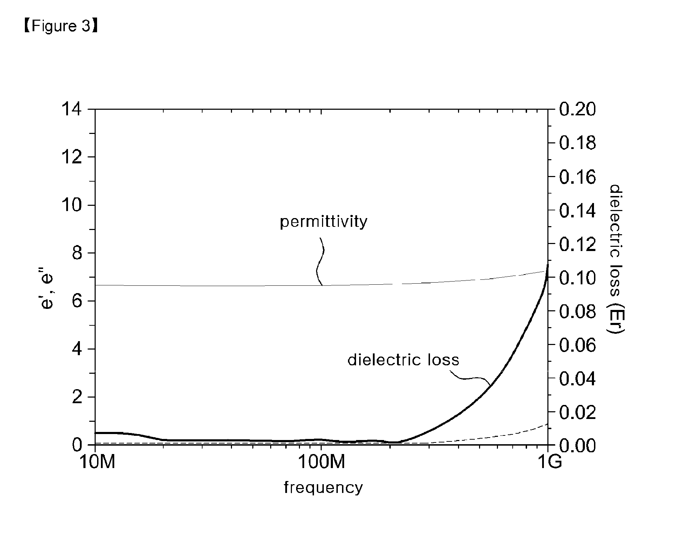

FIG. 3 is a graphic diagram showing the change in the complex permittivity of the nickel-manganese-cobalt spinel ferrite produced according to the first embodiment of the present invention in a frequency range from 10 MHz to 1 GHz. Permittivity is a universal electric constant appearing an equation relating to a physical force (Coulomb force) between two isolated charges and to the change in the property of an electric field (electric displacement), which results from the insertion of a dielectric material into the electric field. Namely, permittivity is a value showing the electrical property of a dielectric material (i.e., a nonconductor).

As shown in FIG. 3, the nickel-manganese-cobalt spinel ferrite according to the first embodiment of the present invention has a dielectric loss of 0.0004 or less at 200 MHz. Also, the nickel-manganese-cobalt spinel ferrite has a permittivity between 6 and 7.

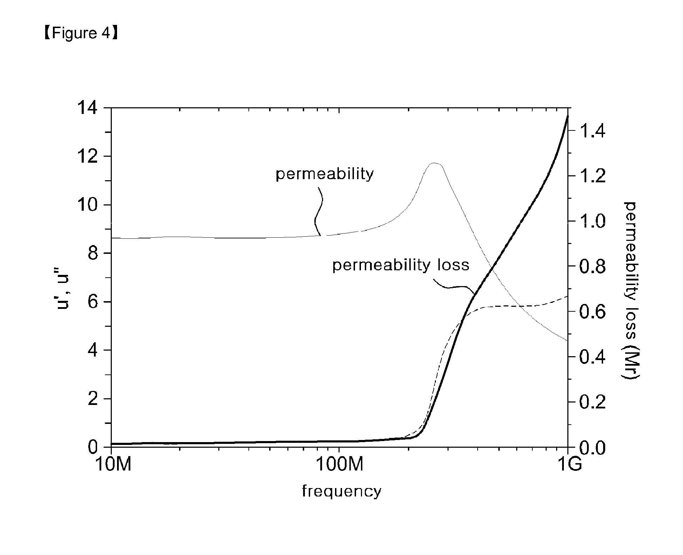

FIG. 4 is a graphic diagram showing the change in the complex permeability of the nickel-manganese-cobalt spinel ferrite according to the first embodiment of the present invention in a frequency range from 10 MHz and 1 GHz. The term "permeability" refers to an amount showing the magnetic property of a material. In other words, it refers to the ratio of magnetic flux density, generated during magnetization caused by a magnetic field, relative to the intensity of the magnetic field in a vacuum.

As can be seen in FIG. 4, the nickel-manganese-cobalt spinel ferrite according to the first embodiment of the present invention has a permeability loss of 0.04 or less at 200 MHz. Also, the spinel ferrite of the present invention has a permeability between 9 and 10.

The nickel-manganese-cobalt spinel ferrite according to the first embodiment of the present invention has a permeability/permittivity ratio between 1.3 and 1.75.

This nickel-manganese-cobalt spinel ferrite according to the first embodiment of the present invention has a very low permeability loss compared to a conventional spinel ferrite. Also, the permeability of the spinel ferrite according to the first embodiment of the present invention is higher than the permittivity.

Accordingly, the nickel-manganese-cobalt spinel ferrite according to the first embodiment of the present invention has a low permeability loss and a low dielectric loss, and thus can be used as a material for electronic components in a high-frequency range.

Specifically, the nickel-manganese-cobalt spinel ferrite according to the first embodiment of the present invention may be used as a material for antenna substrates.

Generally, a dielectric antenna having a permittivity of 6-7 has a length reduction factor of about 2.65. On the other hand, an antenna manufactured using the nickel-manganese-cobalt spinel ferrite according to the first embodiment of the present invention has a length reduction factor of about 8.37, because it has high permittivity and permeability characteristics. Namely, when the nickel-manganese-cobalt spinel ferrite according to the first embodiment of the present invention is used as a material for antenna substrates, the effect of reducing the antenna length will be increased.

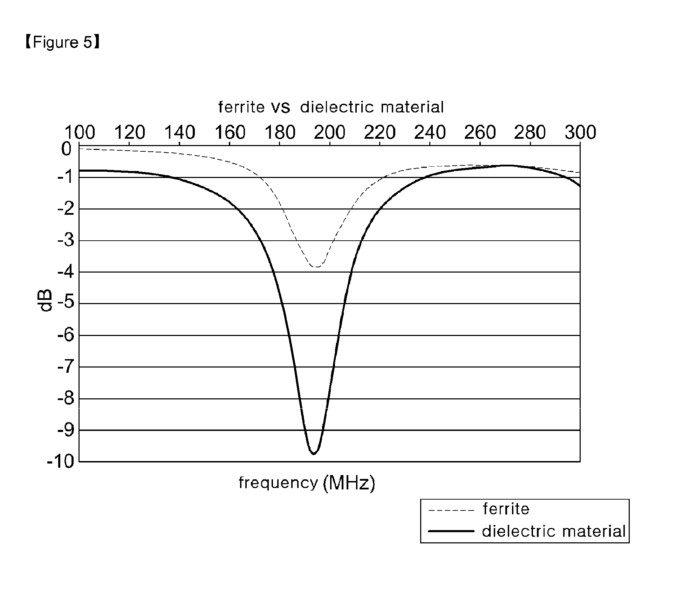

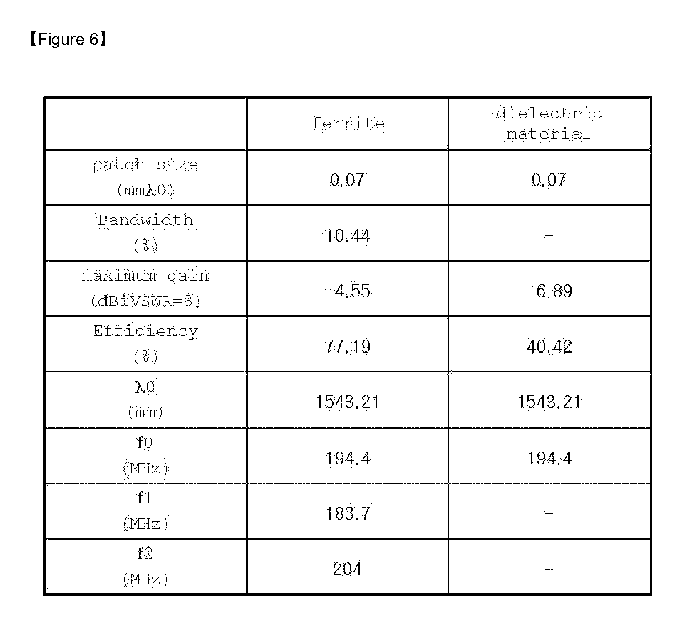

FIG. 5 shows the results of simulating an antenna manufactured using the nickel-manganese-cobalt spinel ferrite according to the first embodiment of the present invention. Specifically, FIG. 5 is a graphic diagram showing the comparison of resonance and dB between an antenna substrate material composed of the nickel-manganese-cobalt spinel ferrite according to the first embodiment of the present invention and a dielectric material of permittivity of 40 having a resonance of the same frequency. FIG. 6 is a table numerically showing the performance characteristics of the materials shown in FIG. 5.

In FIG. 5, the decline of dB means the increase of efficiency, and the lateral spreading of wavelength means the widening of bandwidth. As can be seen in FIG. 5, the nickel-manganese-cobalt spinel ferrite according to the first embodiment of the present invention has excellent performance in terms of efficiency and bandwidth compared to the dielectric material having a permittivity of 40. Namely, it can be seen that the antenna manufactured using the nickel-manganese-cobalt spinel ferrite of the present invention has a wide bandwidth and high efficiency. On the other hand, the antenna manufactured using the dielectric material having a permittivity of 40 has a very low resonance.

As can be seen in FIG. 6, the bandwidth and performance of the antenna manufactured using the nickel-manganese-cobalt spinel ferrite according to the first embodiment of the present invention are superior to those of the antenna manufactured using the dielectric material having a permittivity of 40, and the gain thereof is also excellent.

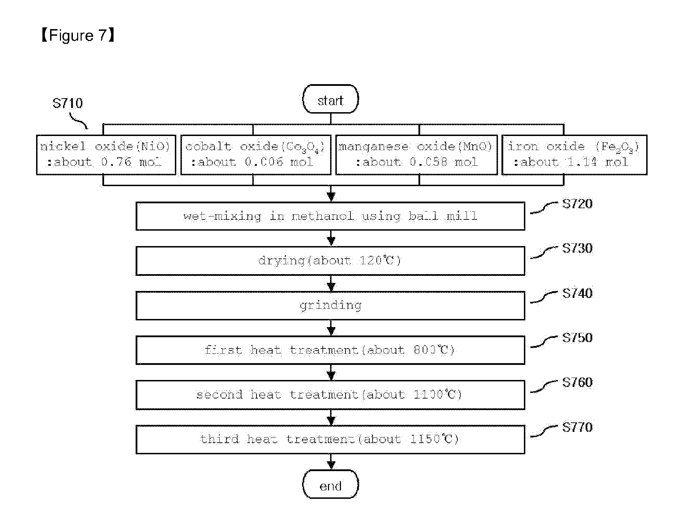

FIG. 7 is a block diagram showing a method for producing a nickel-manganese-cobalt spinel ferrite according to a second embodiment of the present invention.

In the method for producing the nickel-manganese-cobalt spinel ferrite according to the second embodiment of the present invention, nickel oxide, cobalt oxide, manganese oxide and iron oxide are weighed to have a molar ratio of about 0.76 : 0.006 : 0.058 : 1.14 (5710). Herein, the iron oxide preferably has an average particle size of less than 1 µm.

The nickel oxide, cobalt oxide, manganese oxide and iron oxide thus provided are mixed with each other in methanol (MeOH) using a ball mill for about 48 hours (S720).

Powder is collected from the resulting mixture of nickel oxide, cobalt oxide, manganese oxide and iron oxide and dried at about 120 °C for about 12 hours (S730).

The dried powder is ground to have a smaller particle size (S740).

The dried and ground powder is subjected to a first heat-treatment process at a temperature of about 800 °C (S750).

By carrying out the first heat treatment, a process for synthesizing the spinel ferrite in subsequent second heat-treatment and third heat-treatment processes can further be promoted.

The first-heat-treated powder is subjected to a second heat-treatment process at a temperature of about 1100 °C (S760).

The second-heat-treated powder is subjected to a third heat-treatment process at a temperature of about 1150 °C (S770).

Through such processes, the nickel oxide, the cobalt oxide, the manganese oxide and the iron oxide are synthesized into a spinel ferrite.

FIG. 7 shows the second embodiment of the present invention. When the present invention is applied in practice, it is not limited only to the second embodiment. Specifically, nickel oxide, cobalt oxide, manganese oxide and iron oxide may be provided at a molar ratio of 0.6-0.8 : 0.005-0.007 : 0.057-0.059 : 1.13-1.15, the wet mixing step may be carried out for 45-50 hours, and the powder may be dried at a temperature between 110 °C and 130 °C for 11-13 hours.

Also, the first heat treatment may be carried out at a temperature ranging from 750 °C to 850 °C, the second heat treatment may be carried out at a temperature ranging from 1050 °C to 1150 °C, and the third heat treatment may be carried out at a temperature ranging from 1100 °C to 1200 °C.

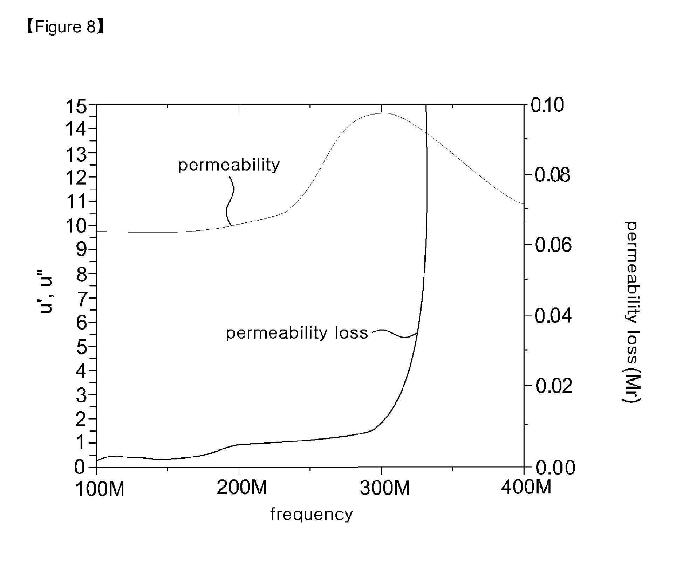

As described above, in the method for producing the nickel-manganese-cobalt spinel ferrite according to the second embodiment of the present invention, iron oxide is used at a molar ratio of 1.13-1.15, which is different from that in the first embodiment, and the second heat treatment and the third heat treatment are carried out at temperatures that are 100 °C lower than those in the first embodiment. The nickel-manganese-cobalt spinel ferrite produced according to the second embodiment of the present invention has a permeability loss of 0.02 or less at 230 MHz as shown in FIG. 8.

In other words, the nickel-manganese-cobalt spinel ferrite according to the second embodiment of the present invention has a permeability loss which is at least 0.02 lower than that of the nickel-manganese-cobalt spinel ferrite according to the first embodiment of the present invention, and thus when it is applied to an antenna, it can increase the efficiency of the antenna. The permittivity and permeability of the nickel-manganese-cobalt spinel ferrite according to the second embodiment of the present invention are 6-7 and 9-10, respectively, which are equal to those of the nickel-manganese-cobalt spinel ferrite according to the first embodiment of the present invention.

As described above, the nickel-manganese-cobalt spinel ferrites according to the first and second embodiments of the present invention have a low permeability loss and a low dielectric loss, and thus can be used as a material for electronic components, particularly a material for antenna substrates, in a high frequency range.

The method for producing the nickel-manganese-cobalt spinel ferrite according to the present invention, and the nickel-manganese-cobalt spinel ferrite produced thereby, have the following effects: The nickel-manganese-cobalt spinel ferrite has a low permeability loss and a low dielectric loss, and thus can be used as a material for electronic components even at high frequencies.

Also, the method for producing the nickel-manganese-cobalt spinel ferrite has a simple production process, and the reproducibility thereof is sufficiently ensured.

In addition, the nickel-manganese-cobalt spinel ferrite can be produced in large amounts and can also be produced in a cost-effective manner.

Although the preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A method for producing a nickel-manganese-cobalt spinel ferrite, the method comprising the steps of:
providing nickel oxide, cobalt oxide, manganese oxide and iron oxide;
wet-mixing the nickel oxide, the cobalt oxide, the manganese oxide and the iron oxide in methanol to obtain a mixture;
collecting powder from the mixture and drying the collected powder;
grinding the dried powder; and
heat-treating the dried powder.

2. The method of claim 1, wherein the heat treatment in the step of heat-treating the powder is carried out a plurality of times.

3. The method of claim 2, wherein the nickel oxide, the cobalt oxide, the manganese oxide and the iron oxide is provided at a molar ratio of 0.6-0.8 : 0.005-0.007 : 0.052-0.054 : 1.04-1.06.

4. The method of claim 2, wherein the nickel oxide, the cobalt oxide, the manganese oxide and the iron oxide is provided at a molar ratio of 0.6-0.8 : 0.005-0.007 : 0.057-0.059 : 1.13-1.15.

5. The method of claim 4, wherein the iron oxide has an average particle size of less than 1 µm.

6. The method of any one of claims 1 to 5, wherein the wet-mixing step is carried out using a ball mill for 45-50 hours.

7. The method of any one of claims 1 to 5, wherein the step of drying the powder is carried out at a temperature between 110 °C and 130 °C for 11-13 hours.

8. The method of any one of claims 1 to 5, wherein a first heat treatment in the heat treatment step is carried out at a temperature between 750 °C and 850 °C.

9. The method of claim 8, wherein the first heat treatment is followed by a second heat treatment which is carried out at a temperature between 1150 °C and 1250 °C.

10. The method of claim 8, wherein the first heat treatment is followed by a second heat treatment which is carried out at a temperature between 1050 °C and 1150 °C.

11. The method of claim 9, wherein the second heat treatment is followed by a third heat treatment which is carried out at a temperature between 1200 °C and 1300 °C.

12. The method of claim 10, wherein the second heat treatment is followed by a third heat treatment which is carried out at a temperature between 1100 °C and 1200 °C.

13. A nickel-manganese-cobalt spinel ferrite produced according to a method of any one of claims 1 to 5.
